# FASCICULE DE BREVET EUROPEEN

(11) **EP 0 481 837 B1**
(45) Date de publication et mention de la délivrance du brevet: **31.08.1994**
(21) Numéro de dépôt: 91402589.5
(22) Date de dépôt: 27.09.1991
(51) Int. Cl.: F16F 15/26, F02B 17/00

(54) **Dispositif d'entraînement de deux arbres d'équilibrage, en particulier pour un moteur de véhicule automobile**
Antriebsvorrichtung von zwei ausgleichenden Wellen, insbesondere für einen Kraftfahrzeugmotor
Driving device for two balanced shafts, in particular for motor vehicle engines

(30) Priorité: 17.10.1990 FR 9012827
(43) Date de publication de la demande: 22.04.1992
(73) Titulaire: AUTOMOBILES PEUGEOT, 75116 Paris (FR); AUTOMOBILES CITROEN, 92200 Neuilly-sur-Seine (FR)
(72) Inventeur: Marie, Dominique, F-78700 Conflans Sainte Honorine (FR)
(74) Mandataire: Durand, Yves Armand Louis

(56) Documents cités:
- BE-A- 529 858
- DE-A- 3 642 487
- DE-B- 1 048 075
- FR-A- 2 378 179
- GB-A- 340 720
- GB-A- 512 662
- GB-A- 2 042 681
- US-A- 4 703 724

## Description

La présente invention concerne un dispositif d'entraînement de deux arbres d'équilibrage, en particulier pour un moteur de véhicule automobile.

Dans les moteurs à combustion interne, il est bien connu d'équilibrer les forces d'inertie produites par les mouvements alternatifs, notamment de translation des pistons dans les cylindres et, de rotation et de translation des bielles, afin d'éviter les vibrations que celles-ci occasionnent. Cette opération consiste dans un premier temps, pour un moteur à quatre temps et quatre cylindres en ligne, à régler la distribution afin de réaliser l'équilibrage des forces dites du premier ordre. Les forces d'inertie subsistant après cette première opération, dites forces d'inertie du deuxième ordre, sont équilibrées dans un second temps, par la disposition de part et d'autre du vilebrequin, de deux contrepoids de masse appropriée et montés sur deux arbres tournant en sens inverse l'un par rapport à l'autre avec une vitesse double de celle du vilebrequin.

L'entraînement en rotation de ces arbres d'équilibrage est réalisé de façon connue par des dispositifs qui mettent en oeuvre des jeux de pignons, roues dentées ou transmissions à chaîne. Or, ces dispositifs sont le plus souvent bruyants, encombrants, et nécessitent des opérations de graissage fréquentes. On connaît également un dispositif d'entraînement d'arbres d'équilibrage qui est constitué principalement d'une courroie crantée sur ses deux faces opposées. Bien que ce dispositif soit peu encombrant et particulièrement silencieux dans son utilisation, il n'en est pas moins plus coûteux dans sa fabrication. Ainsi, les inconvénients révélés par ces dispositifs connus contrebalancent l'agrément procuré par la suppression de la résultante des forces d'inertie du deuxième ordre.

La présente invention résout ces problèmes en proposant un dispositif d'entraînement de deux arbres d'équilibrage notamment pour moteur de véhicule automobile, de conception simple, économique et d'encombrement réduit, qui fonctionne avec le minimum de bruits en ne nécessitant pas d'entretien particulier, ainsi qu'un moteur équipé d'un tel dispositif dont on a limité les vibrations sans produire de bruits supplémentaires et indésirables en contrepartie.

A cet effet, la présente invention a pour objet un dispositif selon le preambule de la revendication 1. Un tel dispositif est connu du document DE-A-3 642 487. Ce dispositif est caractérisé en ce que les deux extrémités d'une biellette sont articulées respectivement sur les deux arbres, de telle façon que le premier arbre entraîné en rotation par le vilebrequin provoque la rotation en sens inverse de l'autre arbre, ou deuxième arbre.

Suivant une réalisation particulière de l'invention, la transmission précitée est constituée par une courroie coopérant avec une poulie calée sur le premier arbre et sur laquelle est articulée l'une des extrémités de la biellette.

L'autre extrémité de la biellette est articulée sur une platine, de même épaisseur que la poulie précitée, et calée sur le deuxième arbre.

Suivant une autre caractéristique de l'invention, la biellette précitée est fixée par ses extrémités, de part et d'autre d'un plan passant par les axes de rotation respectifs de la poulie et de la platine.

Suivant encore une autre caractéristique de l'invention, la biellette est reliée de manière articulée par ses deux extrémités, respectivement à la poulie et à la platine au moyen de vis traversant les extrémités de la biellette, formant axe d'articulation, et se vissant respectivement sur la poulie et la platine.

On précisera que les vis précitées sont montées dans des paliers sur lesquels la biellette peut tourner librement en rotation. Et la poulie et la platine précitée sont fixées par des vis respectivement sur une extrémité du premier arbre et du deuxième arbre.

L'invention a encore pour objet un moteur équipé d'un dispositif d'entraînement de deux arbres d'équilibrage répondant aux caractéristiques décrites ci-dessus.

Mais d'autres caractéristiques et avantages de l'invention, apparaîtront mieux dans la description détaillée qui suit et se réfère aux dessins annexés, donnés uniquement à titre d'exemple et dans lesquels.

La figure 1 est une vue schématique et partielle, de l'avant du bloc cylindres d'un moteur à combustion interne, équipé d'un dispositif d'entraînement des arbres d'équilibrage selon l'invention.

La figure 2 est une vue partielle, et en coupe suivant la ligne II-II de la figure 1.

La figure 3 est une vue similaire à la figure 2, mais en coupe suivant la ligne III-III de la figure 1.

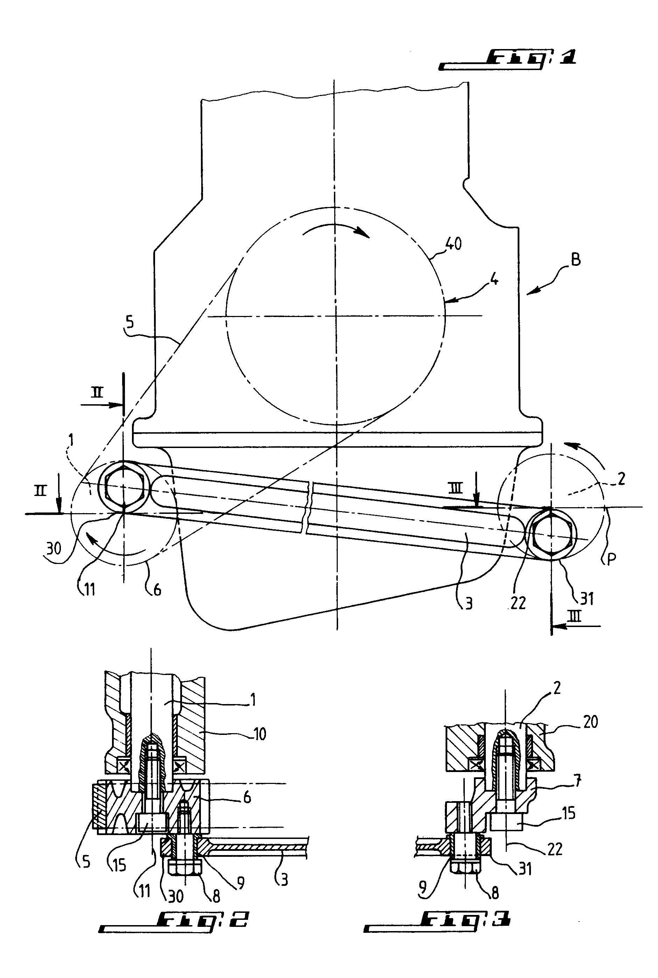

En se reportant. à la figure 1, on voit le bloc cylindres B d'un moteur à combustion interne du type classique, à l'intérieur duquel est monté un vilebrequin 4. Ce vilebrequin 4 est entraîné en rotation à une fréquence deux fois moins élevée que celle des forces d'inertie alternatives du deuxième ordre, dont on veut annuler les effets. On équilibre donc ces dernières, de manière connue en soi, au moyen de deux contrepoids tournant en sens inverse, et à vitesse double de la vitesse de rotation du vilebrequin 4. A cet effet, le bloc cylindres B précité comporte deux arbres d'équilibrage 1, 2 auxquels sont associés deux contrepoids 10, 20. Ces arbres 1, 2, disposés de part et d'autre du vilebrequin 4, et parallèlement à ce dernier, sont entraînés en rotation en sens inverse l'un par rapport à l'autre. L'entraînement en rotation de l'un des arbres 1, ou premier arbre, est réalisé par l'intermédiaire d'une courroie 5 à simple denture, engrènée sur une poulie 6 montée en bout de l'arbre précité 1, et sur la poulie 40 du vilebrequin 4, sur laquelle elle prend son mouvement.

Selon l'invention, l'entraînement en rotation de l'autre 2 des deux arbres 1 et 2, ou deuxième arbre, est réalisé par transmission du mouvement entre les deux arbres 1, 2 par l'intermédiaire d'une biellette 3.

A cet effet, cette biellette 3 est fixée de manière articulée par ses deux extrémités 30, 31, respectivement sur la joue de la poulie 6 calée sur le premier arbre d'équilibrage 1 et sur une face d'une platine 7, de même épaisseur que la poulie précitée 6, et montée en bout sur le deuxième arbre 2.

La condition d'obtention d'une rotation en sens inverse du deuxième arbre 2, est la fixation de façon articulée des deux extrémités 30, 31 de la biellette 3, de part et d'autre d'un plan P passant par les axes de rotation 11, 22, respectifs des deux arbres 1, 2.

On précisera que les vitesses de rotation souhaitées des arbres 1, 2 seront obtenues en choisissant des diamètres appropriés pour les poulies 6, 40. De la même façon, les masses et positions des contrepoids 10, 20 seront prédéterminées de façon à assurer l'équilibrage escompté des forces d'inertie.

En se reportant plus particulièrement aux figures 2 et 3, on peut voir un mode de réalisation de la liaison articulée des extrémités 30, 31 de la biellette 3, respectivement à la poulie 6 du premier arbre 1 et à la platine 7 du deuxième arbre 2. Cette fixation est réalisée au moyen d'une vis 8 traversant un palier 9 placé dans l'orifice de passage de chaque extrémité 30, 31 de la biellette 3, avant de se visser dans la poulie 6 ou respectivement la platine 7.

En outre, la fixation de la poulie 6 et de la platine 7 en bout de leurs arbres respectifs 1, 2, est également réalisée par l'intermédiaire d'une vis 15.

On décrira ci-après brièvement le fonctionnement du dispositif d'entraînement des deux arbres d'équilibrage dont la structure vient d'être décrite.

En fonctionnement, le vilebrequin 4 entraîné en rotation, engendre la rotation dans un même sens du premier arbre 1, lequel provoque par l'intermédiaire de la biellette 3 la rotation en sens inverse de l'autre arbre 2, grâce à l'articulation de la biellette 3, de part et d'autre du plan P passant par les axes d'articulation 11, 22 des deux arbres 1, 2.

On pourra noter que la biellette peut être réalisée entre autres, en aluminium moulé.

On a donc réalisé suivant l'invention un dispositif d'entraînement de deux arbres d'équilibrage, en particulier pour un moteur à quatre temps et à quatre cylindres en ligne qui, compte tenu du nombre réduit de pièces qu'il met en jeu est peu encombrant et résistant, seule la courroie nécessitant un capotage de protection. Ce dispositif est en outre particulièrement économique et ne nécessite pas d'entretien particulier. On a donc évité l'utilisation de systèmes à engrenages qui requièrent pour un bon fonctionnement, le renouvellement assez fréquent d'opérations de graissage, et qui engendrent des bruits indésirables en contrepartie des avantages qu'ils procurent.

Bien entendu, l'invention n'est nullement limitée au mode de réalisation décrit et illustré, qui n'a été donné qu'à titre d'exemple.

## Revendications

1. Dispositif d'entraînement de deux arbres (1, 2) assurant notamment l'équilibrage des forces d'inertie du second ordre, engendrées par les pièces en mouvement d'un moteur de véhicule automobile, du genre dans lequel l'un des arbres, ou premier arbre (1), est entraîné en rotation par le vilebrequin (4) d'un moteur par l'intermédiaire d'une transmission reliée à ce vilebrequin, et dans lequel les deux extrémités (30, 31) d'une biellette (3) sont articulées respectivement sur les deux arbres (1, 2), caractérisé en ce que les deux extrémités (30, 31) sont articulées sur les deux arbres (1, 2) de telle façon que le premier arbre (1) entraîné en rotation par le vilebrequin (4) provoque la rotation en sens inverse de l'autre arbre (2), ou deuxième arbre.

2. Dispositif selon la revendication 1, caractérisé en ce que la transmission précitée est constituée par une courroie (5), coopérant avec une poulie (6) calée sur le premier arbre (1), et sur laquelle est articulée l'une des extrémités (30) de la biellette (3).

3. Dispositif selon la revendication 2, caractérisé en ce que l'autre extrémité (31) de la biellette (3) est articulée sur une platine (7) de même épaisseur que la poulie précitée (6) et calée sur le deuxième arbre (2).

4. Dispositif selon le revendication 3, caractérisé en ce que la biellette précitée (3) est fixée par ses extrémités (30, 31) de part et d'autre d'un plan (P) passant par les axes de rotation respectifs (11, 22) de la poulie (6) de la platine (7).

5. Dispositif selon l'une quelconque des revendications précédentes, caractérisé en ce que la biellette (3) est reliée de manière articulée par ses deux extrémités (30, 31), respectivement à la poulie (6) et à la platine (7), au moyen de vis (8) traversant les extrémités (30 et 31) de la biellette (3) en formant axe d'articulation, et se vissant respectivement sur la poulie (6) et la platine (7).

6. Dispositif selon l'une quelconque des revendications 3 à 5, caractérisé en ce que les vis (8) précitées sont montées dans des paliers (9) sur lesquels la biellette (3) peut tourner librement en rotation.

7. Dispositif selon les revendications 3 à 6, caractérisé en ce que la poulie (6) et la platine précitée (7) sont fixées par des vis (15) respectivement sur une extrémité du premier arbre (1) et du deuxième arbre (2).

8. Moteur équipé d'un dispositif d'entraînement de deux arbres d'équilibrage selon l'une quelconque des revendications 1 à 7.

## Claims

1. Device for driving two shafts (1, 2) ensuring in particular the balancing of the inertia forces of the second order generated by the moving parts of an engine of an automotive vehicle, of the kind in which one of the shafts or first shaft (1) is rotated by the crankshaft (4) of an engine through the medium of a transmission connected to this crankshaft and in which both ends (30, 31) of a link (3) are pivotally connected to both shafts (1, 2), respectively, characterized in that both ends (30, 31) are pivotally connected to both shafts (1, 2) in such a manner that the first shaft (1) rotated by the crankshaft (4) causes the rotation of the other shaft (2) or second shaft in the reverse direction.

2. Device according to claim 1, characterized in that the aforesaid transmission is constituted by a belt (5) cooperating with a pulley (6) seated on the first shaft (1) and to which is pivotally connected one of the ends (30) of the link (3).

3. Device according to claim 2, characterized in that the other end (31) of the link (3) is pivotally connected to a plate (7) of the same thickness as the aforesaid pulley (6) and seated on the second shaft (2).

4. Device according to claim 3, characterized in that the aforesaid link (3) is fastened with its ends (30, 31) on either side of a plane (P) passing through the respective axes of rotation (11, 22) of the pulley (6) and of the plate (7).

5. Device according to any one of the foregoing claims, characterized in that the link (3) is connected in a pivoted manner with its two ends (30, 31) to the pulley (6) and to the plate (7), respectively, by means of screws (8) extending through the ends (30 and 31) of the link (3) while forming a pivot pin and screwed into the pulley (6) and the plate (7), respectively.

6. Device according to any one of claims 3 to 5, characterized in that the aforesaid screws (8) are mounted in bearings (9) on which the link (3) may freely turn in rotation.

7. Device according to claims 3 to 6, characterized in that the pulley (6) and the aforesaid plate (7) are fastened with screws (15) onto one end of the first shaft (1) and of the second shaft (2), respectively.

8. Engine fitted with a device for driving two balancing shafts according to any one of claims 1 to 7.

## Patentansprüche

1. Vorrichtung zum Antrieb von zwei insbesondere das Gleichgewicht der durch die sich bewegenden Teile eines Kraftfahrzeugmotors erzeugten Trägheitskräfte der zweiten Ordnung gewährleistenden Wellen (1,2), derjenigen Gattung, bei welcher die eine dieser Wellen bzw. erste Welle (1) gemäss einer Drehbewegung durch die Kurbelwelle (4) eines Motors über eine mit dieser Kurbelwelle verbundene Übertragung angetrieben wird und bei welcher die beiden Enden (30,31) eines Lenkers (3) jeweils an den beiden Wellen (1,2) angelenkt sind, dadurch gekennzeichnet, dass die beiden Enden (30,31) an den beiden Wellen (1,2) derart angelenkt sind, dass die durch die Kurbelwelle (4) gemäss einer Drehbewegung angetriebene erste Welle (1) die Drehung der anderen Welle (2) oder zweiten Welle in umgekehrter Richtung verursacht.

2. Vorrichtung nach Anspruch 1, dadurch gekennzeichnet, dass die vorgenannte Übertragung durch einen mit einer auf der ersten Welle (1) festsitzenden Scheibe (6) zusammenwirkenden Riemen (5) gebildet wird und an welcher Scheibe das eine der Enden (30) des Lenkers (3) angelenkt ist.

3. Vorrichtung nach Anspruch 2, dadurch gekennzeichnet, dass das andere Ende (31) des Lenkers (3) an einer auf der zweiten Welle (2) festsitzenden Platte (7) mit derselben Dicke wie die vorgenannte Scheibe (6) angelenkt ist.

4. Vorrichtung nach Anspruch 3, dadurch gekennzeichnet, dass der vorgenannte Lenker (3) mit seinen Enden (30,31) beiderseits einer durch die jeweiligen Drehachsen (11,22) der Scheibe (6) und der Platte (7) führenden Ebene (P) befestigt ist.

5. Vorrichtung nach irgendeinem der vorangehenden Ansprüche, dadurch gekennzeichnet, dass der Lenker (3) mit seinen beiden Enden (30,31) jeweils mit der Scheibe (6) und der Platte (7) mittels unter Bildung von Gelenkzapfen die Enden (30 und 31) des Lenkers (3) durchsetzenden und sich jeweils in die Scheibe (6) und in die Platte (7) schraubenden Schrauben (8) in gelenkiger Weise verbunden ist.

6. Vorrichtung nach irgendeinem der Ansprüche 3 bis 5, dadurch gekennzeichnet, dass die vorgenannten Schrauben (8) in Lagern (9), an welchen der Lenker (3) frei drehbar ist, angeordnet sind.

7. Vorrichtung nach den Ansprüchen 3 bis 6, dadurch gekennzeichnet, dass die Scheibe (6) und die vorgenannte Platte (7) jeweils an einem Ende der ersten Welle (1) und der zweiten Welle (2) durch Schrauben (15) befestigt sind.

8. Mit einer Vorrichtung zum Antrieb von zwei Ausgleichswellen ausgerüsteter Motor gemäss irgendeinem der Ansprüche 1 bis 7.
